# EUROPEAN PATENT APPLICATION

(11) **EP 1 538 530 A1**
(43) Date of publication of application: **08.06.2005**
(21) Application number: 03741448.9
(22) Date of filing: 16.07.2003
(51) Int. Cl.: G06F 13/00, G06F 17/60

(54) **INFORMING SYSTEM**

(30) Priority: 23.07.2002 JP 2002214499
(71) Applicant: Kabushiki Kaisha Eighting, Tokyo 140-0014 (JP)
(72) Inventor: FUJISAWA, Tomonori Kabushiki Kaisha Eighting, Shinagawa-ku, Tokyo 140-0014 (JP); SATOU, Shouji, Kuroiso-shi, Tochigi 325-0000 (JP)
(74) Representative: HOFFMANN EITLE
(86) International application number: PCT/JP2003/009073
(87) International publication number: WO 2004/010309

(57) **Abstract**

E-mails that can be broadcast-delivered at a low cost are used, and it can be accurately confirmed whether an informative matter has reached and whether one will attend or not, for example. A service server (130) for relaying information from an informing person (110) to informed persons (120) is connected to terminals (111,112) of the informing person and to terminals (121,122) of the informed persons via a computer network (140). The service server (130) transmits to the informed persons (120) an informative e-mail (131) including a URL linked to the informative matter of the informing person (110). In the URL, there have been prepared WWW-compliant description language documents including an answer column corresponding to the foregoing informative matter. The service server (130) detects data (123) related to the foregoing answer column transmitted from the terminals (121,122) of the informed persons, and transmits, as an informative e-mail (132), the detected data to the terminals (111,112) of the informing person.

## Description

### TECHNICAL FIELD

The present invention relates to an informing system used within a group of persons.

### BACKGROUND TECHNOLOGY

There has been employed a pyramid type of or a loop type of informing network using a telephone as an informing and publicizing system in each of various human groups represented by, for instance, sports clubs or other circles in universities or PTA organizations. In the pyramid type or loop type of informing network, however, when a relaying person does not deliver necessary information to the next person in the communication chain because of forgetting or for any other reason, the necessary information is not informed to a plurality of members at downstream layers in the group, and this type of non-delivery phenomenon in which necessary information is not delivered to some members in a group often occurs in our daily life, which is disadvantageous. Further, in the informing and publicizing method described above, information delivery is dependent of persons' memory, so that the contents to be delivered may change by and by.

Recently there are groups using an electronic mail system which has been increasingly popularized and spreading as an informing network based on a mailing list system in which broadcasting is possible. In this type of information network based on a mailing list system, because of the characteristics of the electronic mail system not insuring delivery of a sent mail to the targets, it is always uncertain whether a sent mail has been delivered to all of the targets or not, and especially in a case of electronic mails sent and received through mobile phones, because of restrictions relating to the display and a number of characters, the system is extremely insufficient as a secure information system.

Japanese Patent Laid-Open Publication No. 2001-344377 discloses an attendance management system comprising a host terminal device and a guest terminal device for managing attendance to a meeting which a number of persons is to participate by making use of an electronic mail system through a communication network, and the host terminal device comprises an ascertaining mail transmitting means for transmitting an ascertaining mail to check whether each of the receivers of the mail will attend the meeting or not; an answer mail receiving means for receiving an answer mail with an answer to a question asking whether the receiver will attend the meeting or not described therein; a determining and classifying means for determining contents of the answers and accumulating the answers as data therein; an attendance list preparing means for preparing an attendance list indicating a situation of attendance in the meeting based on the answers classified by the determining and classifying means; an answer mail reception detecting means for detecting whether the answer mails have been received or not; a time detecting system for detecting a period of time elapsed after transmitting of the ascertaining mail; and an ascertaining mail retransmitting means for retransmitting the ascertaining mail to the guest terminal device when reception of the answer mail is not detected even after a prespecified period of time elapses, while the guest terminal device comprises an ascertaining mail receiving means for receiving the ascertaining mail transmitted from the host terminal device; and an answer mail transmitting means for transmitting the answer mail with an answer concerning attendance in the meeting described therein.

Although format information indicating a format of an answer mail is included in the ascertaining mail according to the invention disclosed in the publication, with only the format information, generation of a rule mistake can be expected, and it is difficult to determine contents of an answer in a terminal device in the host side. Further when an ascertaining mail is automatically sent to all persons not having an answer yet, circumstances of the persons are completely ignored, and when the persons can hardly receive an electronic mail for some reasons or other, repeated transmission of an ascertaining mail is meaningless, and therefore it is impossible to accurately confirm whether they will attend the meeting or not. Principally, when only an ascertaining mail and an answer mail are transacted between a terminal device in the host side and that in the guest side, the problem of no guarantee for arrival of mails specific to the electronic mail system is not solved, so that there is the strong need for creation of a new informing network.

Further Japanese Patent Laid-Open Publication No. 2002-91872 discloses an invention relating to a support system for informing an event, ascertaining attendance in the event, and collecting responses from receivers making use of the multimedia communication, but the means for automatically detecting response mails is utilized like in the conventional inventions as described above, it can not be said that the method satisfies the needs as described above.

### DISCLOSURE OF THE INVENTION

The present invention was made in the light of the circumstances as described above, and it is an object of the present invention to provide, in the current circumstances where no guarantee is provided for arrival of an electronic mail and there is a limit for a number of characters available in an E-mail prepared by and transmitted from a mobile telephone, an informing system capable of delivering an information without fail and ascertaining responses from receivers of the information such as those indicating whether the receivers will attend a meeting or not by making use of the electronic mail system capable of broadcasting mails to a number of receivers in batch with lower cost.

The informing system according to the present invention comprises a service server for relaying communications from an informing person to informed persons, and terminals owned by the informing person and the informed persons connected to each other via a computer network, and this informing system is characterized in that the service server transmits an informing E-mail including a URL linking to a matter informed by the informing person to the informed persons.

The URL preferably prepares a document described with www-compatible language and including a response column corresponding to the informed matter. The document is preferably subjected to processing allowing for divided screen display to accommodate various and different display capabilities of the terminal devices owned by the informed persons.

The service server preferably detects data concerning the response column transmitted from the terminal devices of the informed persons, and transmits a result of detection as a reporting E-mail to the terminal device of the informing person. The reporting E-mail preferably includes a plurality of choices for a method of re-informing.

The reporting E-mail preferably includes a URL for linking to the detection result, and the URL preferably has a document described with www-compatible language including the report on a result of detection. The document described with the www-compatible language preferably includes a plurality of choices for a method of re-informing. The document is preferably subjected processing allowing for divided screen display to accommodate various and different display capabilities of the terminal devices owned by the informing persons.

### BRIEF DESCRIPTION OF THE DRAWINGS

Fig. 1 is a general block diagram showing an informing system according to the present invention;
Fig. 2 is a view showing an example of a top screen for this informing system service on a mobile telephone;
Fig. 3 is a flow chart showing the processing performed by an informing person 110 to transmit E-mails to informed persons 120 in batch via a service server 130;
Fig. 4 is a view showing an example of a screen display of an informing guidance mail on a mobile telephone owned by one of the informed persons 120;
Fig. 5 is a flow chart showing the procedure for ascertaining whether the receivers has responded to the informing E-mail or not;
Fig. 6 is a flow chart showing the processing for checking persons not having responded to the sent informing E-mail performed in a service server 130;
Fig. 7 is a view showing a screen display for a guidance mail for reporting persons not responded to the informing mail yet on a mobile telephone owned by the informing person 110; and
Fig. 8 is a flow chart showing the procedure for additionally treating the persons not having responded to the initial informing guidance mail.

### BEST MODE FOR CARRYING OUT THE INVENTION

A preferable embodiment of the informing system according to the present invention is described below.

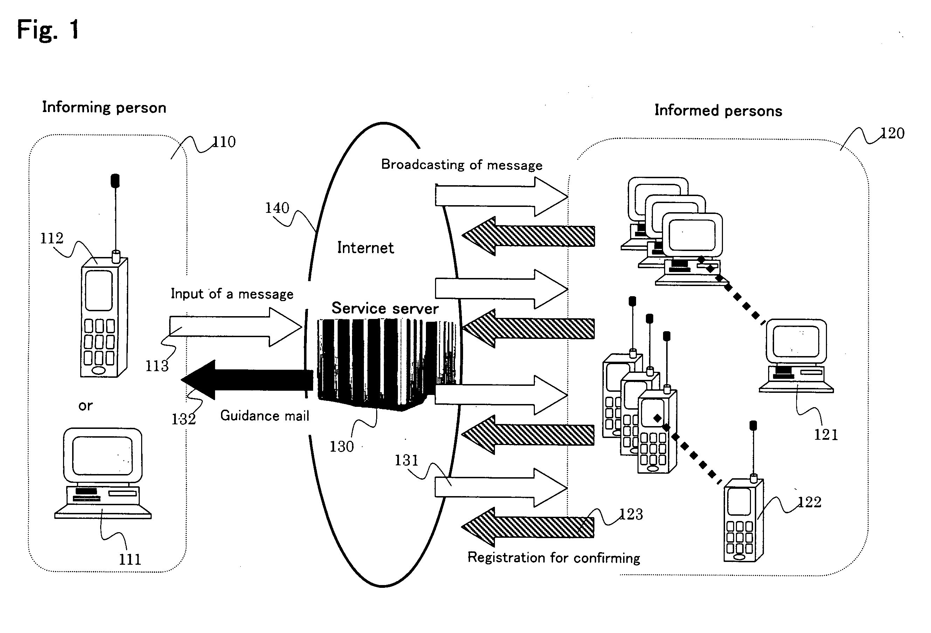

Fig. 1 is a general block diagram showing this informing system, and Fig. 1 shows the state in which a personal computer 111 or a mobile telephone 112 owned by an informing person 110 transmitting a matter to be informed, and a personal computer 121 or a mobile telephone 122 owned by one of informed persons (group) 120 receiving the informed matter, and a service server 130 providing and managing the informing and relaying service, are connected to each other via a computer network 140 such as the Internet. The devices used for this service are not limited to the personal computers 111, 121 and mobile telephones 112, 122, and any type of device may be employed so long as the device can be connected to a computer network such as the Internet.

An owner of the terminal device is required to previously make a registration for membership through a prespecified procedure for receiving the service provided by this informing service, and each member is also required to make a registration for membership of a group to which the member belongs. When the informing person 110 informs a matter to be informed to other members of the group or ascertains whether the other group members will attend a meeting or the like or not, the informing person 110 transmits E-mails (step 131) concerning a matter to be informed or a question whether the receivers will attend a meeting or the like or not from the terminal device (111 or 121) via the service server 130 (step 113) to all of the group members or a plurality of specified members in batch.

Each of the informed persons 120 having received the E-mails respectively reads a message concerning an informed matter or ascertaining whether the receiver will attend the meeting or the like or not and inputs and transmits a response to the informed matter requiring an answer or indicating whether the receiver will attend the meeting or the like or not (step 123) from the receiver' s terminal (121, 122) to the service server 130.

The data concerning the response inputted by the receiver to the informed matter or indicating whether the receiver will attend the meeting or the like or not is repeatedly checked by the service server 130 at a prespecified time interval to detect persons not having sent a response to the informed matter to indicate whether the receivers will attend the meeting or the like or not respectively, and report guidance mails having a format of a list for showing names of the persons are automatically transmitted to the informing person 110 (step 132).

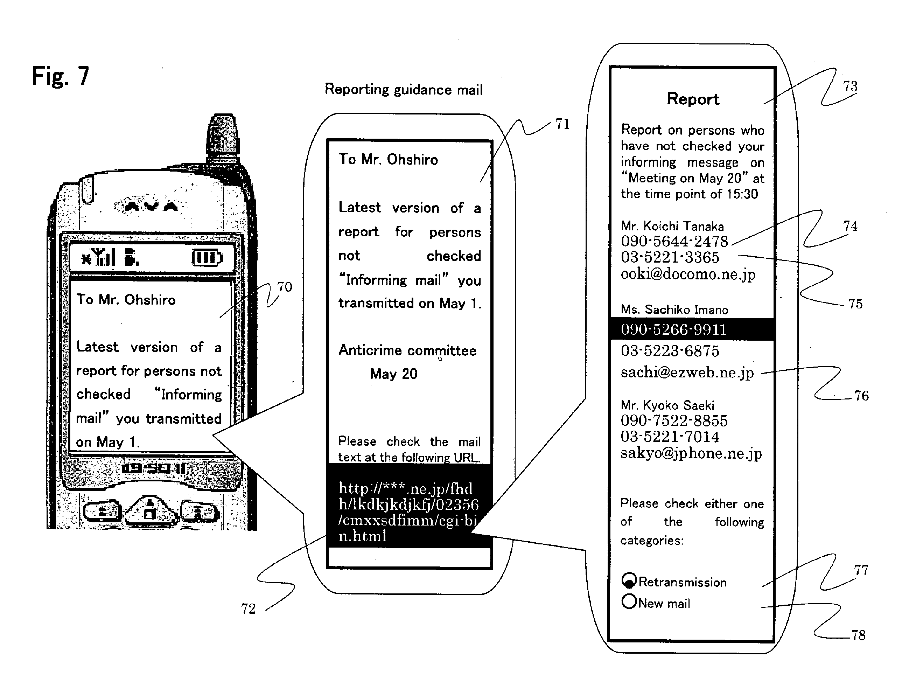

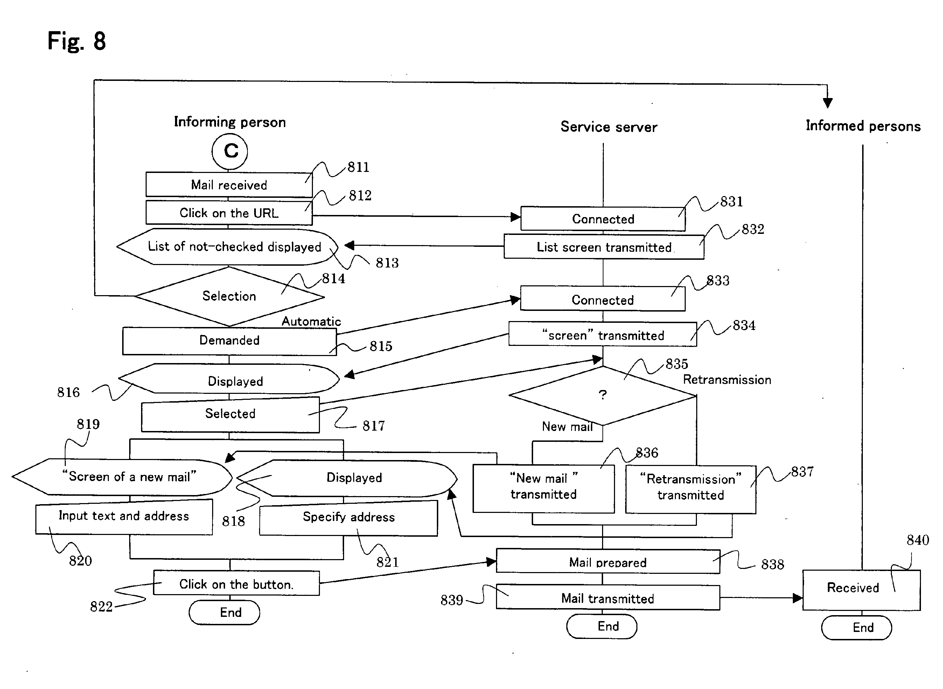

Further as described with reference to Fig. 7 and Fig. 8 hereinafter, the informing person 110 having received the report guidance mail can accurately inform a necessary matter to be informed to and ascertain intention for attendance of the all group members by selecting a communication means presumably suitable to each group member shown in the list screen and utilizing the communication means without fail.

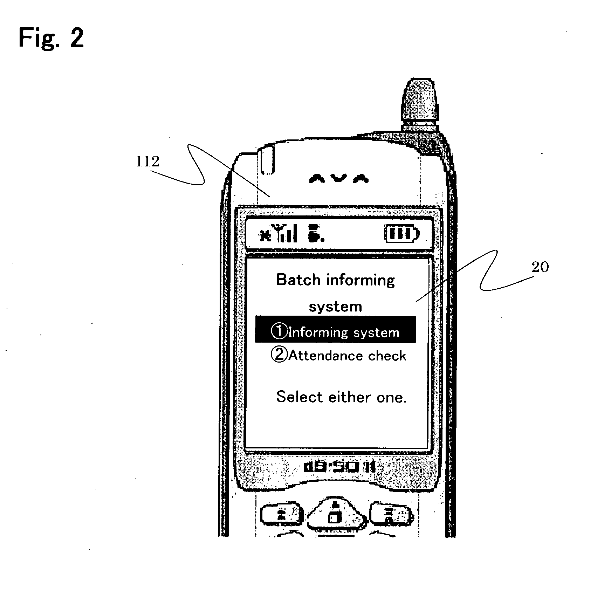

The informing system according to the present invention is described in further detail below. Fig. 2 is a display screen 20 on the mobile telephone 112 owned by the informing person 110, and this display screen 20 shows an example of a top screen for the information system service. Although two menus of "Information system" and "Attendance checking system" are shown on the screen 20, as the two systems have the substantially identical configuration, only the "Informing system" is described below.

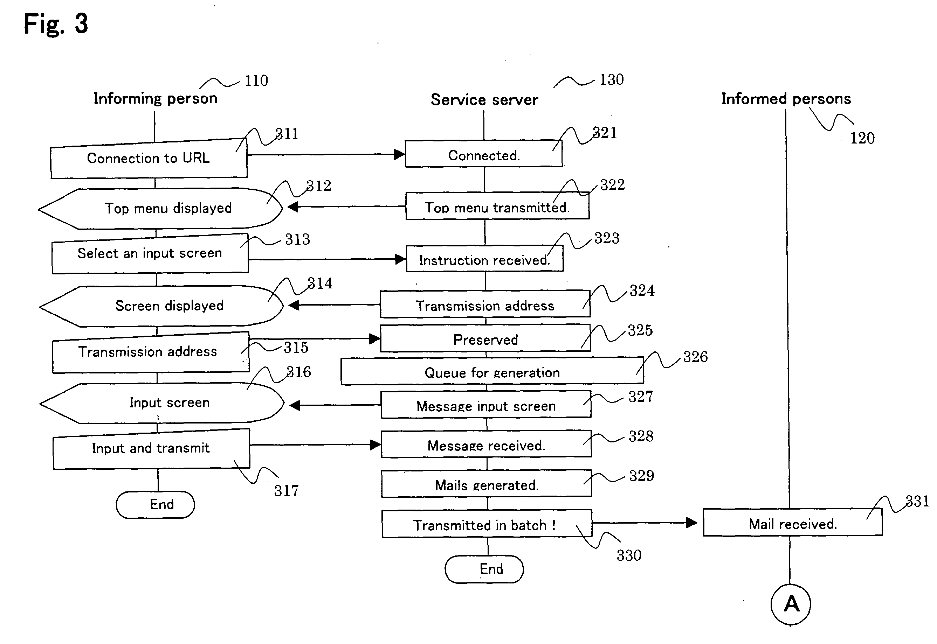

Fig. 3 is a flow chart showing the processing performed by the informing person 110 having selected the "Informing system" menu to transmit E-mails from the terminal device (111, 112) to the informed persons 120 in batch via the service server 130, and this diagram comprises three connection flows for the informing person 110, service server 130, and informed persons 120 respectively.

At first, the informing person 110 connects the terminal device (111, 112) owned to the specified URL (step 311). This operation is performed through the general access procedure such as input of a password and the like, and the person and a group to which the person belongs are identified by the service server 130. The service server 130 transmits (step 322) an initial screen upon recognition of a signal from the connected person (step 321), and the initial screen is displayed on the terminal owned by the informing person 110 (step 312). This screen is the example shown in Fig. 2. When the informing person 110 identifies this screen and selects the "Informing system" (step 313), the service server 130 identifying the instruction (step 323) transmits the specified screen to addresses of members registered in the corresponding group (step 324). It is preferable not only that each group member or a plurality of specified group members can be specified, but also that specification of group members having a specific role in the group or one or more subgroups in the group can easily be specified.

The informing person 110 having confirmed the display of the screen (step 314) specifies addresses of receivers according to the procedure described above (step 315) and transmits the specification to the service server 130. When the service server 130 receives this specification, the service server 130 temporally stores the addresses (step 325) and generates the address record in a file for confirmation (step 326), and then transmits a message input screen to the informing person 110 (step 327).

The informing person 110 inputs a message on the input screen received by and displayed on the terminal device (111, 112) (step 316), and transmits the message to the service server 130. The service server 130 having received the specification for delivery of E-mails (step 328) generates informing guidance mails corresponding to the message (step 329) for every address stored as described above (step 325) and transmits the E-mails in batch (step 330).

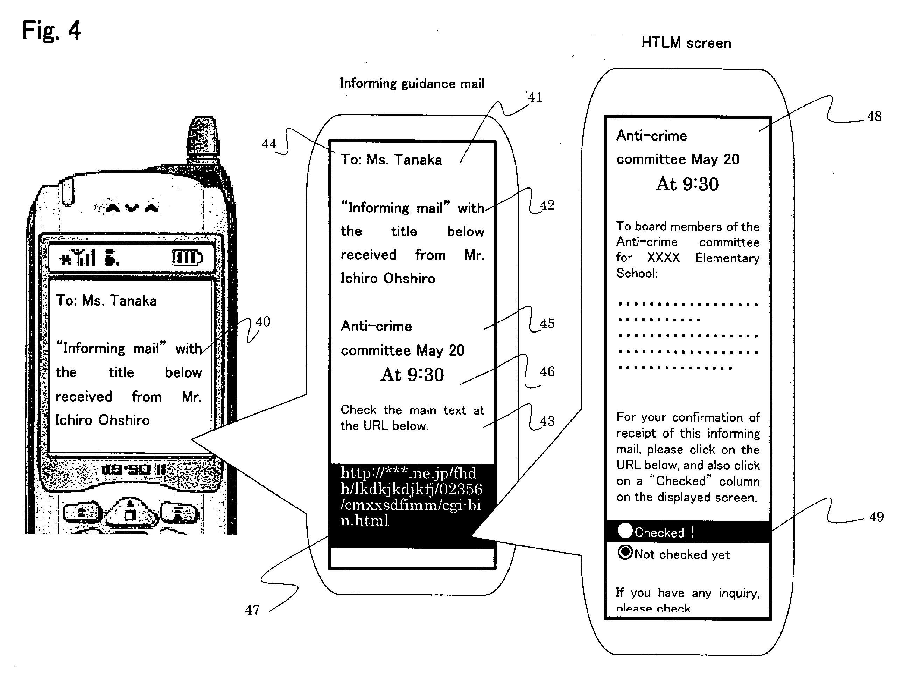

The informed persons 120 receives this informing guidance mail respectively (step 331). Fig. 4 shows an example of a display screen 40 on the mobile telephone 122 owned by one of the informed persons 120, and this informing guidance mail 41 comprises sentences each having a prespecified format such as "The following title ···" 42, "The following URL ···" 43, receivers' names 44, a title 45, time 46 when the message is inputted by the informing person, a screen URL corresponding to records for respective addresses generated in the service server 130 and corresponding to the receivers' names 44, and the like.

A message 48 corresponding to a record for each address shown in a balloon in Fig. 4 is displayed on a terminal screen 40 when the screen URL 47 corresponding to the address records clicked. The message 48 comprises a document described with a www-compatible language such as HTML, HDML, MML, SGML, XML, and the like. A capacity of the file (a number of characters) is preferably limited to about 5K bytes, and it is also preferable that the service server 130 has the capability of dividing a screen display, when a message surpassing the limit capacity (a limit number of characters) is inputted and transmitting the divided screen display to the linked addressed.

In this embodiment, the informing guidance mail 41 includes a URL 47 and is divided to the sentences each having a prespecified format and the message 48 informing a matter to be informed to respond to a restriction over a number of characters in one E-mail transmitted on a mobile telephone such as, for instance, 64 full size characters. Also a method of limiting a number of characters inputted by the informing person 110 for transmission is conceivable, but in that case some troubles may occur in delivery of a necessary informing message.

The message 48 includes a "Confirmation !" button 49 which each of the informed persons 120 clicks for confirmation of receipt of the message 48, and when the receiver selects and clicks on this button 49, the service server 130 inputs a specific value in a conformation field for each address record in the confirmation file described above.

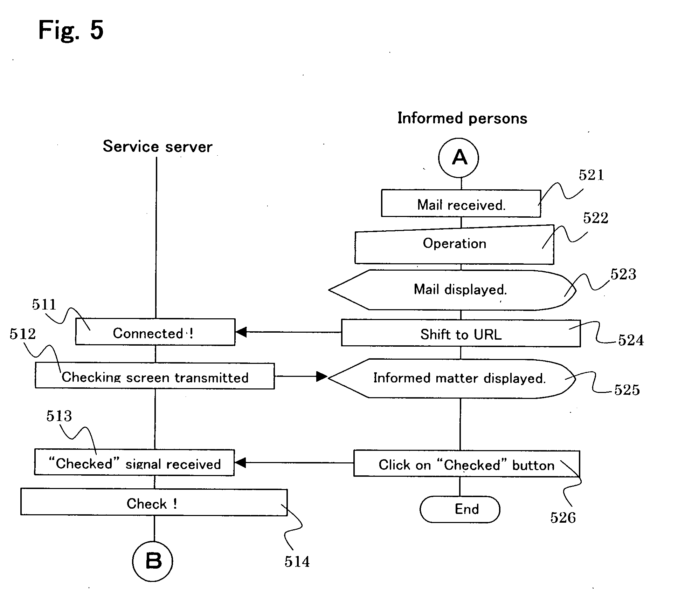

The procedure for confirmation of checking is described below with reference to a flow chart showing the procedure for informing between the service server 130 and the informed persons 120 shown in Fig. 5.

In succession to step A in the flow chart in Fig. 3, when one of the informed persons 120 (described as informed person 120 hereinafter) receives an informing guidance mail (step 521) and performs an operation for displaying the mail (step 522), the informing guidance mail 41 is displayed on the terminal screen 40 of the mobile telephone 122 owned by the informed person 120 (step 523). After the informed person 120 confirms the contents and clicks on the screen URL 47 corresponding to the address record shown in a lower section of the screen (step 524), the terminal device is connected to the service server 130 (step 511), and the service server 130 transmits the message 48 described with, for instance, the HTML format specified in the URL to the connected mobile telephone 122 (step 512). The informed person 120 receives the message 48, checks the displayed informed matter (step 525), selects and clicks on the "Confirmation !" button (step 526).

The service server 130 having received the signal (step 513) inputs a specific value in the confirmation field for an address record of each receiver within the file for confirmation (step 514). The file for confirmation with the specific value inputted therein is checked by a checking means within the service server 130 described below with a list of persons not having checked the message 48 prepared by a means for preparing a list of persons not having checked a transmitted message, and the list is periodically reported to the informing person 110.

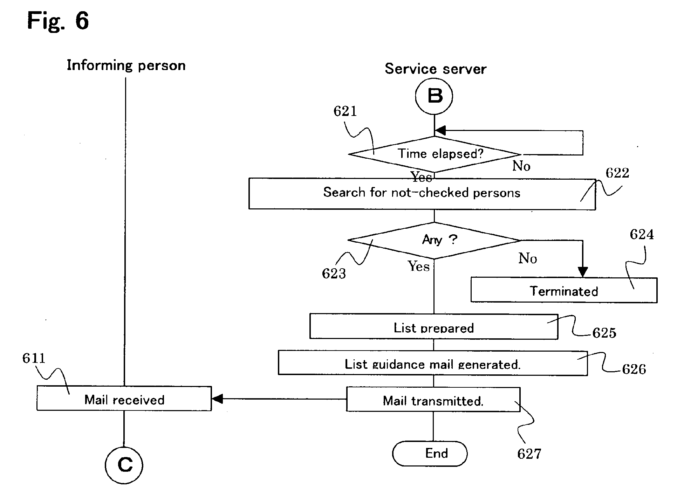

Fig. 6 is a flow chart showing the procedure for detecting persons not having checked the transmitted message following the step B shown in Fig. 5.

The confirmation checking means in the service server 130 checks all records in the file for confirmation (step 622) in a predetermined period of time or at each specified time after the information message is inputted (step 621) to determine whether any person not having checked the message is present or not (step 623), and when it is determined that all persons have checked the message, the service server 130 terminates the operation for checking (step 624). When it is determined that any object person is present, the means for preparing a list of persons not having checked a transmitted message within the service server 130 prepares a not-checked person list (step 625), generates a not-checked person reporting guidance mail for the informing person 110 (step 626), transmits the mail (step 627), and terminates the operation sequence.

As another means provided in the service server 130 for terminating the reporting work described above, it is preferable to provide a "Terminate (or stop) the reporting processing" button within the display screen for the not-checked person list (a not-checked person reporting text 73 described hereinafter) so that the informing person 110 can terminate the subsequent reporting work by selecting (clicking on) the button. In this aspect of the present invention, it is possible to evade the state in which the reporting processing is continuously executed even though any informing person 110 communicates with the informed person 120 with other means for communications such as a telephone in the not-checked person reporting text 73 described hereinafter.

The informing person 110 receives this not-checked person reporting guidance mail (step 611). Fig. 7 is an example of the display screen 70 on the mobile telephone 112 owned by the informing person 110, and the entire not-checked person reporting guidance mail 71 is shown as a balloon, and a URL 72 for linking to the not-checked person reporting text 73 is included in the reporting guidance mail 71. The not-checked person reporting text 73 drawn as a balloon is described with a www-compatible language such as HTML.

The reporting guidance mail for not-checked persons is prepared taking into consideration various restrictions such as a number of characters specific to the terminal device like in the informing mail described in relation to Fig. 4.

Next a sequence of the following operations performed for the persons not having checked the informing guidance mail with reference to the flow chart shown in Fig. 8. Fig. 8 comprises sequences of operations performed by the informing person 110, informed person 120, and service server 130 respectively.

In succession to step C in the flow chart shown in Fig. 6, the informing person 110 having received the not-checked person reporting guidance mail and checked the contents (step 811) clicks on the URL 72 in the reporting guidance mail 71 shown in Fig. 7 (step 812), so that the person' s terminal device is connected to the service server 130 (step 831). The service server 130 having received the signal transmits the not-checked person reporting text 73 prepared with HTML or the like previously prepared (step 832).

The informing person 110 having received the not-checked person reporting text 73 and made the text 73 displayed on a screen of the mobile telephone 112 (step 813) can contact the not-checked person(s), after the person(s) shown in the informing guidance mail are recognized, by selecting an appropriate one from a plurality of re-informing methods described in the not-checked person reporting text 73 (step 814). Any of the following five methods can be selected as the re-informing method: (1) 74: placing a call to a first telephone number 74, (2) 75: placing a call to a second telephone number 75, (3) 76: sending an E-mail to a mail address 76, (4) 77: sending a re-informing mail via the service server 130 to the not-checked person(s), and (5) 78: sending a new message mail via the service server 130 to the not-checked person(s).

Principally the not-checked person reporting guidance mail is transmitted in a certain period of time after the first message is transmitted or at every prespecified time to the informing person 110 until there is not any person not having checked the first message, but the informing person 110 can freely select the timing for carrying out the re-informing processing. The choice (3) of 76: sending an E-mail to a mail address 76 is preferably differentiated from the choice (5) 78: sending a new message mail via the service server 130 to the not-checked person(s) on the criteria whether an E-mail is transmitted to a single person or to a plurality of selected persons.

Of the five choices described above, in the choice (1) of placing a call to the first telephone number 74 and in the choice (2) of placing a call to the second telephone number 75, when the telephone number is clicked to invert the display on the mobile telephone 112 or the like, the call is automatically placed to the corresponding telephone number, so that additional work load such as storing the telephone number in an address notebook or the like is not required, and therefore the system is very convenient, and miss calling never occurs. Further also in the choice (3) of sending an E-mail to the mail address 76, also when clicking on the choice display is performed to invert the display, the mailer is automatically invoked, so that the same effect as that by selecting the telephone number 74 or 75 described above is provided.

The sequence of operations performed via the service server 130 for providing necessary information to the not-checked person(s) is described below.

In the choice (4) of sending a re-informing mail via the service server 130 to the not-checked person(s) and in the choice (5) of sending a new message mail via the service server 130 to the not-checked person(s), in the case shown in Fig. 8, the processing including screen partitioning (steps 815, 833, 834, 816) is performed to respond to a restriction over a number of characters which can be treated on a mobile telephone.

On the other hand, Fig. 7 shows the not-checked person reporting text 73 not partitioned.

In the not-checked person reporting text 73 shown in Fig. 7, the operation for selecting a "Retransmission to not-checked person(s)" button corresponds to the operation for selecting the "Automatic operation screen" in Fig. 8 (step 817). The service server 130 having received the selection signal determines which of retransmission of the first mail and transmission of a new mail is selected (step 835), and when it is determined that retransmission has been selected, the service server 130 generates a retransmission screen including the message originally inputted as an informing mail together with the selection screen for the group member(s) as destination(s) (step 837), and transmits the retransmission screen. Similarly, when a "Mail to not-checked person(s)" button 78 is selected, the service server 130 generates and transmits a "Message inputted as an informing mail" portion as an input item (step 836) of the retransmission screen.

These screens are displayed on the terminal device owned by the informing person 110 (steps 818, 819). The informing person 110 specifies an address or addresses (step 821), and when a new mail is transmitted, the informing person 110 inputs to the address(es) and a message (step 820), and then transmits the message to the service server 130 (step 822). The service server 130 having received this signal generates a mail or mails for the address(es) (step 838), and transmits the mail(s) to the informed person(s) 120 (step 839). The informed person(s) 120 receive(s) the mail(s) respectively (step 840).

In the operations for "specifying an address or addresses (step 821)" and for "inputting address(es) and message(s) step 820)", typically the persons listed in the not-checked person list 73 are automatically displayed each with a checking mark (such as a radio button or a check box) as persons to be addressed, and the checking mark is eliminated from each of the informed person(s) displayed in the list who is not to be treated as an object person for some reasons or other.

As described above, with the informing system according to the present invention, delivery of a matter to be informed or checking for intention concerning attendance at various types of meetings conventionally performed over a telephone network or using a facsimile machine or an electronic mail can be performed more quickly, more accurately, and more easily with a lower cost with a personal computer, a mobile telephone, a PDA, and other terminal devices connected to a computer network.

## Claims

1. A informing system comprising a service server for relaying communications from an informing person to informed persons and terminal devices owned by said informing person and said informed persons connected to each other via a computer network, wherein said service server transmits informing E-mails each including a URL for linking a matter by informed the informing person to said informed persons.

2. A informing system according to claim 1, wherein said URL has a document described with a www-compatible language and including a response column corresponding to said informed matter.

3. A informing system according to claim 2, wherein said document described with www-compatible language has been processed for screen partition for various display capacities of terminal devices owned by said informed persons.

4. A informing system according to claim 1, wherein said service server detects data concerning said response column transmitted each of the terminal devices owned by said informed persons, and transmits a result of detection as a reporting E-mail to the terminal device owned by said informing person.

5. A informing system according to claim 4, wherein said reporting E-mail includes a plurality of choices for re-informing methods.

6. A informing system according to claim 4, wherein said reporting E-mail includes a URL for linking to said result of detection and the URL has a document described with www-compatible language and including the result of detection.

7. A informing system according to claim 6, wherein said document described with www-compatible language includes a plurality of choices for re-informing methods.

8. A informing system according to claim 6, wherein said document described with www-compatible language has been subjected to a screen partition processing to accommodate various display capacities of the terminal device owned by said informing person.
